# EUROPEAN PATENT SPECIFICATION

(11) **EP 1 609 299 B1**
(45) Date of publication and mention of the grant of the patent: **16.08.2006**
(21) Application number: 04723241.8
(22) Date of filing: 25.03.2004
(51) Int. Cl.: H04M 3/56, H04M 3/42

(54) **SYSTEM AND METHOD OF SETTING UP A TELEPHONE CONFERENCE**
SYSTEM UND VERFAHREN ZUM AUFBAU EINER TELEFONKONFERENZ
SYSTEME ET PROCEDE DESTINES A ETABLIR UNE CONFERENCE TELEPHONIQUE

(30) Priority: 03.04.2003 GB 0307720
(43) Date of publication of application: 28.12.2005
(73) Proprietor: INTELLPROP LIMITED, Guernsey, Channel Islands (GB)
(72) Inventor: WILSON, Jeffrey, Fareham, Hampshire PO16 70H (GB)
(74) Representative: Pilch, Adam John Michael
(86) International application number: PCT/GB2004/001296
(87) International publication number: WO 2004/088963

(56) References cited:
- EP-A- 1 098 504
- GB-A- 2 376 608
- US-B1- 6 275 575

## Description

This invention relates to telecommunications services apparatus and methods, specifically in the context of telephone conferencing systems that enable multiple callers to participate in an audio conference. The invention is primarily applicable to users of mobile telephone networks that support text messaging, but users of fixed line telephones may also participate in the conferences.

Audio conferencing systems exist for connection to both analogue and digital telephone communication networks. These systems use either analogue bridges or digital signal processing techniques to combine audio from callers and to play combined audio to each participant in the conference. With the advance of digital techniques, more complex algorithms have been employed to improve the quality of the combined audio heard by each caller.

Today there exist several distinct categories of conferencing―
- Meet-me services, generally aimed at the residential user. These are normally automatic systems not requiring any booking or operator intervention to set up a conference. Callers dial in at a pre-agreed time and each caller pays for his own call.
- Chairman outdial services, generally aimed at business use. The organiser, or chairman, specifies the telephone numbers to be outdialled by the system, and normally pays for all of the calls. Automated systems exist to allow on-demand chairman-outdial conferencing without operator intervention.
- Bureau-based conferencing, where an operator takes bookings and sets up conferences on behalf of a chairman.

Systems for implementing these schemes may either be network based or use 'in-house' equipment operated by a company.

In addition there is also in use a hybrid category, which may be known as viral conferencing, whereby the features of meet-me and chairman outdial conferencing are advantageously combined. In this scheme, participants of a meet-me style conference are provided with the facility to outdial to additional participants. The system may be arranged to reverse bill these additional parties so that each caller still pays for their own leg of the conference call.

Each of the conferencing schemes described is applicable to mobile telephone networks as well as fixed networks; however the characteristics of mobile networks can cause problems with chairman-outdial style implementations. It is common for mobile calls to drop due to interruptions in coverage, especially when the caller is moving. To rejoin the conference, the chairman must then redial the dropped participant. Furthermore, if it is the chairman who drops out and he is paying for all the calls, then all the other callers must be disconnected too. The chairman would then have to repeat the whole process of setting up the conference, which is time consuming and inconvenient.

The only alternative to chairman-pays, has to date been to use reverse charging for the outdialled call legs, but this is complex and expensive to introduce into a network and restricts called parties to be subscribers of the same network, which severely limits the applicability of the service.

Furthermore, even if a chairman-outdial scheme uses reverse charging, a dropped participant may not have a number available to redial the conference, since he was originally called by the chairman.

The use of chairman-outdial conferencing, and hence also the viral conferencing scheme which includes outdial as an optional feature, is therefore disadvantaged by the above problems when used on mobile telephone networks.

GB-A-2 376 608 discloses a group conferencing technique where a telephone number is allocated for connection to the conference equipment upon receipt of a conference request identifier in a request message. This number is then communicated to the group members. Accordingly, the conference is based on an organiser searching a group message inviting group members to participate in that conference. There is no provision for any participant to invite a further party to an existing conference at any time, specifying to the system the telephone number of the new participant.

US 6 275 575 discloses a technique for co-ordinating and initiating cross-platform telephone conferences in which each conference is under the control of a conference organiser. This technique allows the addition or removal of participants as the conference progresses, however, this is still under the control of the organiser of the conference. Therefore only the organiser can invite additional parties and the organiser can not leave the conference and still allow for further parties to be invited.

According to one aspect of the invention there is provided telecommunications services apparatus operable to provide a telephone conference facility wherein any participant is able to invite an additional participant to the conference by specifying the telephone number of the new participant, the apparatus comprising means for sending an invitation message to the new participant, the invitation message including a telephone number for the invited participant to dial in order to be connected to the conference.

According to another aspect of the invention there is provided a telecommunications services method for providing a telephone conference facility wherein any participant is able to invite an additional participant to the conference by specifying the telephone number of the new participant, the method comprising sending an invitation message to the new participant, the invitation message including a telephone number for the invited participant to dial in order to be connected to the conference.

Further aspects of the invention provide a computer program for carrying out the above method, and a storage medium on which such computer program is stored.

A preferred embodiment of the present invention aims to overcome the above problems by providing a novel means for implementing viral conferencing, i.e. the combination of meet-me and outdial conferencing techniques, such that dropped participants can easily rejoin the conference. The preferred technique also removes the complexity of reverse billing and the limitation to subscribers of the same network.

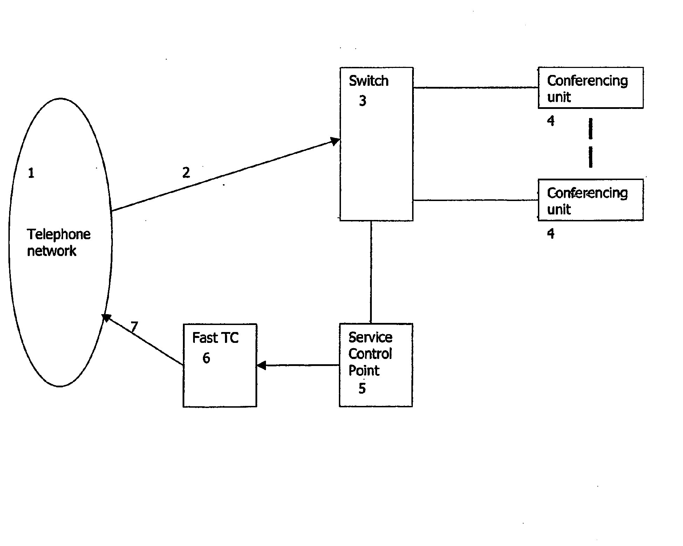

The invention will now be described by way of example with reference to the accompanying drawing (Figure 1) which shows a block diagram of telecommunications services apparatus according to an embodiment of the invention.

Referring to Figure 1, subscribers to any telephone network may access the conferencing system via a host telephone network 1. Calls 2 to the conferencing system are routed to a switch 3. Using intelligence in a service control point (SCP) 5, the switch 3 routes the calls to one of a number of attached conferencing units 4 which implement audio conference bridging. Participants to a conference may initiate an invitation message to an additional desired participant. The invitation request is passed to a transaction convertor (TC) 6 which sends a text message 7 to the desired participant via the network 1.

The transaction convertor 6 may, for example, be an Ocean (RTM) fast TC programmable transaction convertor, manufactured by Telsis Limited. This equipment can perform a wide range of conversions between signalling protocols, such as SS7 and TC/IP.

In a preferred embodiment, the invention is implemented on a mobile telephone network such as a GSM network. In this case the message to invite a new participant to the conference may be a text message using the SMS facility. For other types of network, alternative messaging techniques may be appropriate. For example, if the destination number for the invitation message is a fixed telephone network, then text message delivery will not be successful unless the recipient has a text-capable terminal and is a subscriber to a network that is able to receive text messages from the conferencing network. For fixed network subscribers, it may therefore be more appropriate to send invitation messages by means of a voice call typically generated by a voice processing means (not shown), which plays an announcement inviting the called party to dial the conference. The calling line identity (CLI) of the invitation call may advantageously be set to the required dial-back number to facilitate dialling by the invitee. For example, some networks provide a short code such as 1471 to access the last received CLI and permit simple dial-back. Such outdialled invitation calls may be implemented using the switch 3 instead of the fastTC 6.

The implementation of the meet-me conferencing service and the allocation of calls and conferences to the conference units 4 use known and established techniques. The additional step of the preferred embodiment is to provide the feature of invitation for additional participants from within the conference. The feature works as follows.

In the preferred embodiment, the first caller (the originator of the conference) dials into a service number to start the conference. Using known techniques his call is allocated to one of the conference units 4 with sufficient free resources for a specified minimum conference size, and those resources may preferably be allocated to his conference at that time. The dialled service number may preferably be a short code.

In the preferred embodiment all subsequent participants of this conference enter by invitation. This ensures that every participant pays for his own call and that there are no billing complexities.

The originator invites the next participant by DTMF entry. The DTMF syntax preferably includes a command code such as *, to put the system into a 'command mode' for number collection, followed by entry of a telephone number in either national or international format (e.g. 07123 456789 or +44 7123 456789.) The telephone number may be terminated by a special key such as #, or by a timeout.

The system then allocates a dial-in number with which the desired participant may directly access the conference. The number is preferably dynamically allocated by the system, and indicates which conference to connect into. For security the system may also check the CLI of callers to only allow invited callers to join.

If the number entered by the originator is in national format and corresponds to a fixed line number range, then the system, under the control of the service control point 5, initiates an outdialled voice call to the specified number, and on answer plays an announcement that invites the recipient to dial the conference, and provides the number and instructions.

Alternatively if the entered number is an international or a mobile number then the system, under the control of the service control point 5, initiates a text message via the fastTC 6. The text message is preferably delivered by a direct delivery technique, i.e. in mobile terminated (MT) format directly to the mobile switching centre MSC (not shown) where the recipient is attached, rather than in mobile originated (MO) format to a short message service centre SMSC (not shown). The text message invites the recipient to dial the conference, and facilitates this by inclusion of the number to dial in the text message, so that handset features may be used to easily extract the number to dial. The CLI of the message is set to that of the invitation message originator so that the message appears to come from the originator. If unable to comply with the invitation, the recipient may then easily reply by text to the sender.

During attempted delivery of the invitation message, the sender may optionally either remain in command mode and hear progress information, or press a key such as * to return to the conference. Progress tones for the delivery of the SMS message are synthesised by the apparatus, and may be regarded as providing the function of an 'SMS Ring Tone'. If the message is successfully delivered, the SMS ring tone ceases and a Delivery indication tone may be played. In the preferred embodiment, the SMS ring tone mimics the 'bip-de-bip' transmission interference that may be picked up on audio transducers if a mobile handset is placed in proximity during SMS message delivery, while the Delivery Indication tone copies the standard beeps that are commonly used by default on mobile handsets to indicate text message arrival.

Progress tones for the delivery of a voice announcement, if provided, may comprise normal ringing back-tone, followed by an announcement if the call is answered, busy or times out after a defined number of rings.

The invitation facility from within the conference provides the following key benefits―
- It makes viral conferencing, which is the most convenient form of conferencing for users, to be more commercially attractive for an operator, because it can be implemented with no changes to the operator's existing billing system. This is a major advantage, because changes to a billing system are highly risky and costly to implement, and can be a cause of significant delay in new product introduction.
- It allows conference participants to be invited from any network, whereas reverse billing based solutions would be restricted to subscribers that could be billed by the conference operator, i.e. in most cases subscribers of one network only.
- The conferencing system can be a "Plug and Go" solution, since the only interfaces required are call termination and text message initiation, which are standard. The system can therefore be rolled out easily across multiple networks belonging to a global brand, even though the individual networks may have different equipment architectures and manufacturers.
o Participants can re-enter the conference easily just by redialling if their call is dropped for any reason, and there is no need to disconnect callers if the originator leaves the conference.

The described technique is an adaptation of the known viral conferencing concept that utilises outdial and reverse billing. The present technique instead uses messages inviting participants to dial in, and this transforms the whole conferencing model from a complex and difficult system to implement, to one that is very easy both for the operator and the user.

In so far as the embodiment of the invention described above may be implemented, at least in part, using software-controlled processing apparatus, it will be appreciated that a computer program providing such software control and a storage medium by which such a computer program is stored are envisaged as aspects of the invention.

## Claims

1. Telecommunications services apparatus operable to provide a telephone conference facility wherein any participant is able to invite an additional participant to an existing conference by specifying the telephone number of the new participant, the apparatus comprising means for sending an invitation message to the new participant, the invitation message including a telephone number for the invited participant to dial in order to be connected to the conference.

2. Apparatus according to claim 1, including means for informing the inviting participant of the delivery status of the invitation message to the invited participant by way of an audible progress signal.

3. Apparatus according to claim 1 or claim 2, wherein the invitation message is a text message.

4. Apparatus according to claim 3, wherein the text message is an SMS text message.

5. Apparatus according to claim 3 or claim 4, wherein the calling line identity of the invitation text message is set to be that of the originator of the invitation message.

6. Apparatus according to claim 1 or claim 2, wherein the invitation message is a voice message generated by a voice processing means.

7. Apparatus according to claim 6, wherein the calling line identity of the invitation voice message is set to be the dial-back telephone number for connection to the conference.

8. Apparatus according to any one of claims 1 to 7, including means for checking the calling line identity of a call to the telephone number in the invitation message so as to allow only an invited participant to join the conference.

9. Apparatus according to any one of claims 1 to 8, wherein the conference may continue after the originator of the conference is no longer participating in the conference.

10. A telecommunications services method for providing a telephone conference facility wherein any participant is able to invite an additional participant to an existing conference by specifying the telephone number of the new participant, the method comprising sending an invitation message to the new participant, the invitation message including a telephone number for the invited participant to dial in order to be connected to the conference.

11. A method according to claim 10, including informing the inviting participant of the delivery status of the invitation message to the invited participant by way of an audible progress signal.

12. A method according to claim 10 or claim 11, wherein the invitation message is a text message.

13. A method according to claim 12, wherein the text message is an SMS text message.

14. A method according to claim 12 or claim 13, wherein the calling line identity of the invitation text message is set to be that of the originator of the invitation message.

15. A method according to claim 10 or claim 11, wherein the invitation message is a voice message generated by a voice processing means.

16. A method according to claim 15, wherein the calling line identity of the invitation voice message is set to be the dial-back telephone number for connection to the conference.

17. A method according to any one of claims 10 to 16, including checking the calling line identity of a call to the telephone number in the invitation message so as to allow only an invited participant to join the conference.

18. A method according to any one of claims 10 to 17, wherein the conference may continue after the originator of the conference is no longer participating in the conference.

19. A computer program for implementing a method according to any one of claims 10 to 18.

20. A storage medium storing a computer program according to claim 19.

## Patentansprüche

1. Telekommunikationsdienstevorrichtung, die betreibbar ist, um eine Telefonkonferenzmöglichkeit bereitzustellen, bei der jeder Teilnehmer in der Lage ist, einen zusätzlichen Teilnehmer in eine bestehende Konferenz einzuladen durch Spezifizieren der Telefonnummer des neuen Teilnehmers, wobei die Vorrichtung aufweist eine Einrichtung für das Senden einer Einladungsnachricht zu dem neuen Teilnehmer, wobei die Einladungsnachricht eine zu wählende Telefonnummer für den eingeladenen Teilnehmer beinhaltet, um mit der Konferenz verbunden zu werden.

2. Vorrichtung nach Anspruch 1, die eine Einrichtung für das Informieren des einladenden Teilnehmers über den Auslieferstatus der Einladungsnachricht an den eingeladenen Teilnehmer beinhaltet und zwar mittels eines hörbaren Fortschrittssignals.

3. Vorrichtung nach Anspruch 1 oder Anspruch 2, bei der die Einladungsnachricht eine Textnachricht ist.

4. Vorrichtung nach Anspruch 3, bei der die Textnachricht eine SMS-Textnachricht ist.

5. Vorrichtung nach Anspruch 3 oder Anspruch 4, wobei die Rufnummernanzeige der Einladungstextnachricht auf die des Absenders der Einladungsnachricht eingestellt wird.

6. Vorrichtung nach Anspruch 1 oder Anspruch 2, bei der die Einladungsnachricht eine Sprachnachricht ist, die von einer Sprachverarbeitungseinrichtung erzeugt wurde.

7. Vorrichtung nach Anspruch 6, bei der die Rufnummernanzeige der Einladungssprachnachricht eingestellt wird auf die Rückruftelefonnummer für die Verbindung mit der Konferenz.

8. Vorrichtung nach einem der Ansprüche 1 bis 7, die eine Einrichtung für das Überprüfen der Rufnummernanzeige eines Anrufs zu der Telefonnummer in der Einladungsnachricht beinhaltet, um es nur einem eingeladenen Teilnehmer zu erlauben, an der Konferenz teilzunehmen.

9. Vorrichtung nach einem der Ansprüche 1 bis 8, bei der die Konferenz fortgesetzt werden kann, nachdem der Initiator der Konferenz nicht länger an der Konferenz teilnimmt.

10. Telekommunikationsdiensteverfahren für das Bereitstellen einer Telefonkonferenzmöglichkeit, bei der jeder Teilnehmer in der Lage ist, einen zusätzlichen Teilnehmer in eine bestehende Konferenz einzuladen durch Spezifizieren der Telefonnummer des neuen Teilnehmers, wobei das Verfahren aufweist das Senden einer Einladungsnachricht zu dem neuen Teilnehmer, wobei die Einladungsnachricht eine Telefonnummer für den eingeladenen Teilnehmer beinhaltet, die zu wählen ist, um mit der Konferenz verbunden zu werden.

11. Verfahren nach Anspruch 10, das das Informieren des einladenden Teilnehmers über den Lieferstatus der Einladungsnachricht zu dem eingeladenen Teilnehmer beinhaltet und zwar mittels eines hörbaren Fortschrittsignals.

12. Verfahren nach Anspruch 10 oder Anspruch 11, bei dem die Einladungsnachricht eine Textnachricht ist.

13. Verfahren nach Anspruch 12, bei dem die Textnachricht eine SMS-Textnachricht ist.

14. Verfahren nach Anspruch 12 oder Anspruch 13, bei dem die Rufnummernübertragung der Einladungstextnachricht auf diejenige des Absenders der Einladungsnachricht eingestellt wird.

15. Verfahren nach Anspruch 10 oder Anspruch 11, bei dem die Einladungsnachricht eine Sprachnachricht ist, die von einer Sprachverarbeitungseinrichtung erzeugt wurde.

16. Verfahren nach Anspruch 15, bei dem die Rufnummernübermittlung der Einladungssprachnachricht auf die Rückruftelefonnummer für die Verbindung mit der Konferenz eingestellt ist.

17. Verfahren nach einem der Ansprüche 10 bis 16, das die Überprüfung der Rufnummernübertragung eines Anrufs zu der Telefonnummer in der Einladungsnachricht beinhaltet, um nur einem eingeladenen Teilnehmer zu erlauben, an der Konferenz teilzunehmen.

18. Verfahren nach einem der Ansprüche 10 bis 17, bei dem die Konferenz fortgesetzt werden kann, nachdem der Begründer der Konferenz nicht länger an der Konferenz teilnimmt.

19. Computerprogramm für das Implementieren eines Verfahrens nach einem der Ansprüche 10 bis 18.

20. Speichermedium, das ein Computerprogramm nach Anspruch 19 speichert.

## Revendications

1. Appareil de services de télécommunications en mesure de fournir une fonction de conférence téléphonique dans laquelle tout participant est en mesure d'inviter un participant supplémentaire à une conférence existante en spécifiant le numéro de téléphone du nouveau participant, l'appareil comprenant un moyen destiné à envoyer un message d'invitation au nouveau participant, le message d'invitation comprenant un numéro de téléphone que le participant invité doit composer pour se connecter à la conférence.

2. Appareil selon la revendication 1, comprenant un moyen destiné à informer le participant invitant de l'état de remise du message d'invitation au participant invité, sous la forme d'un signal sonore de progression.

3. Appareil selon la revendication 1 ou la revendication 2, dans lequel le message d'invitation est un message de texte.

4. Appareil selon la revendication 3, dans lequel le message de texte est un message de texte SMS.

5. Appareil selon la revendication 3 ou la revendication 4, dans lequel l'identité de la ligne appelante, dans le message de texte d'invitation, est renseignée en y plaçant celle de l'auteur du message d'invitation.

6. Appareil selon la revendication 1 ou la revendication 2, dans lequel le message d'invitation est un message vocal produit par un moyen de traitement vocal.

7. Appareil selon la revendication 6, dans lequel l'identité de la ligne appelante du message vocal d'invitation est renseignée en y plaçant le numéro de téléphone à rappeler pour la connexion à la conférence.

8. Appareil selon l'une des revendications 1 à 7, comprenant un moyen destiné à vérifier l'identité de la ligne appelante d'un appel au numéro de téléphone placé dans le message d'invitation, afin de n'autoriser à se joindre à la conférence qu'un participant invité.

9. Appareil selon l'une des revendications 1 à 8, dans lequel la conférence peut se poursuivre lorsque la personne à l'origine de la conférence ne participe plus à la conférence.

10. Procédé de services de télécommunications, destiné à fournir une fonction de conférence téléphonique dans laquelle tout participant est en mesure d'inviter un participant supplémentaire à une conférence existante en spécifiant le numéro de téléphone du nouveau participant, le procédé comprenant l'étape consistant à envoyer un message d'invitation au nouveau participant, le message d'invitation comprenant un numéro de téléphone que le participant invité doit composer pour se connecter à la conférence.

11. Procédé selon la revendication 10, comprenant l'étape consistant à informer le participant invitant de l'état de remise du message d'invitation au participant invité, sous la forme d'un signal sonore de progression.

12. Procédé selon la revendication 10 ou la revendication 11, dans lequel le message d'invitation est un message de texte.

13. Procédé selon la revendication 12, dans lequel le message d'invitation est un message de texte SMS.

14. Procédé selon la revendication 12 ou la revendication 13, dans lequel l'identité de la ligne appelante, dans le message de texte d'invitation, est renseignée en y plaçant celle de l'auteur du message d'invitation.

15. Procédé selon la revendication 10 ou la revendication 11, dans lequel le message d'invitation est un message vocal produit par un moyen de traitement vocal.

16. Procédé selon la revendication 15, dans lequel l'identité de la ligne appelante du message vocal d'invitation est renseignée en y plaçant le numéro de téléphone à rappeler pour la connexion à la conférence.

17. Procédé selon l'une des revendications 10 à 16, comprenant l'étape consistant à vérifier l'identité de la ligne appelante d'un appel au numéro de téléphone placé dans le message d'invitation, afin de n'autoriser à se joindre à la conférence qu'un participant invité.

18. Procédé selon l'une des revendications 10 à 17, dans lequel la conférence peut se poursuivre lorsque la personne à l'origine de la conférence ne participe plus à la conférence.

19. Programme d'ordinateur destiné à mettre en oeuvre un procédé selon l'une quelconque des revendications 10 à 18.

20. Support de stockage stockant un programme d'ordinateur selon la revendication 19.
